# FASCICULE DE BREVET EUROPEEN

(11) **EP 3 984 416 B1**
(45) Date de publication et mention de la délivrance du brevet: **10.09.2025**
(21) Numéro de dépôt: 21202471.5
(22) Date de dépôt: 13.10.2021
(51) Int. Cl.: A47G 21/00, B29C 43/02, C08K 5/09, C08L 3/02, C08L 99/00, C08L 101/16, A21D 13/02

(54) **COMPOSITION POUR LA FABRICATION DE PRODUITS BIODEGRADABLES A PARTIR DE SON, PROCEDE DE MISE EN FORME**
ZUSAMMENSETZUNG ZUR HERSTELLUNG VON BIOLOGISCH ABBAUBAREN PRODUKTEN AUS KLEIE UND ENTSPRECHENDES FORMUNGSVERFAHREN
COMPOSITION FOR THE PRODUCTION OF BIODEGRADABLE PRODUCTS FROM BRAN, METHOD FOR SHAPING

(30) Priorité: 13.10.2020 FR 2010453
(43) Date de publication de la demande: 20.04.2022
(73) Titulaire: Bruno Conzanet Conseil, 24000 Perigueux (FR)
(72) Inventeur: COZANET, Bruno, 24000 PERIGUEUX (FR); BERNARD, Charlie, 24750 BOULAZAC (FR)
(74) Mandataire: Aquinov

(56) Documents cités:
- EP-A1- 1 500 683
- WO-A1-01/39612
- JP-A- H11 166 055

## Description

L'invention concerne une composition pour la fabrication de produits biodégradables à partir de son, plus particulièrement de son de blé, et l'invention vise aussi la mise en forme pour l'obtention des produits.

La fabrication de produits à base de son et plus particulièrement de son de blé est connue. Par exemple, WO 01/39612 A1 divulgue un procédé de fabrication de pièces moulées biodégradables dans lequel le son de blé est utilisé comme matière première primaire.
D'autres exemples de compositions biodégradables sont divulgués dans JP H11 166055 A et EP 1 500 683 A1.
JP H11 166055 A divulgue un article biodégradable ayant une résistance mécanique élevée obtenue par moulage d'un matériau contenant du son de blé et un composé organique naturel ou synthétique, qui peut être la chitine.
EP 1 500 683 A1 divulgue une composition pour la fabrication de pièces moulées biodégradables, en particulier d'ustensiles de table contenant du son libre, en particulier celui du blé, constituant une fraction de son sélectionnée d'une granulométrie de 0,01 à 2,80 mm contenant de 7 % à 45 % d'eau structurellement liée sous forme d'humidité.

Les produits envisagés sont essentiellement des produits comme de la vaisselle. En effet, la vaisselle jetable fabriquée à partir de produits pétroliers n'est plus acceptable et il est activement recherché de la vaisselle qui soit biodégradable et issue de matières premières renouvelables. Les produits selon la présente invention sont biodégradables.

De la vaisselle à partir de son de blé a déjà été réalisée mais ce type de produits se heurte à des contraintes importantes et à des problèmes lors de stockage longue durée. En effet, les paramètres mécaniques sont importants car il faut que le produit soit mécaniquement rigide pour être tenu et pour recevoir une charge. Le produit doit aussi répondre favorablement à une soumission à des rayonnements microondes lors d'opérations de réchauffage de matières alimentaires contenues dans ledit produit.

Une autre contrainte est liée au stockage. En effet, il s'écoule souvent de nombreux jours voire quelques semaines entre la fabrication des produits et leur utilisation. Ces produits sont donc stockés et comme ils sont réalisés à base de matériaux organiques d'origine naturelle et qu'ils présentent un certain taux d'humidité, des moisissures peuvent se développer. Ces microorganismes peuvent présenter une certaine dangerosité pour l'homme, notamment le Claviceps responsable de l'ergo de blé ou de seigle.

Durant la mise en œuvre de la composition par le procédé selon la présente invention, on a constaté que les produits du marché nécessitent des durées de mélangeage longues, des températures élevées de mise en œuvre par pressage et enfin des étapes de refroidissement très longues pour certains procédés.

L'objet de la présente invention est de proposer une composition à base de son de blé comme matière première pour la fabrication d'un produit thermo-moulé, dont les paramètres permettent de répondre aux impératifs de résistance mécanique, de résistance aux températures, d'exposition aux microondes, et surtout de retarder l'apparition de moisissures. L'objet de l'invention est aussi de proposer un procédé permettant la réalisation de produits à des prix de fabrication acceptables par le marché, moins énergivores.

Un produit thermo-moulé au sens de l'invention a subit une étape de thermoformage. Il s'agit d'un produit thermoformé.

Selon un premier aspect, la présente invention décrit une composition pour la fabrication d'un produit thermo-moulé comprend du son de blé avec une granulométrie comprise entre 200 et 800 µm et un taux stabilisé d'humidité compris entre 5 et 15% en poids de son ainsi que de l'eau et au moins un agent apte à lutter contre l'apparition de moisissures, l'agent destiné à lutter contre l'apparition de moisissures étant choisi parmi le benzoate de sodium, le sorbate de potassium, le thiobendazole, et l'acide ascorbique.

L'ajout d'un agent particulier à la matière première composé de son de blé permet d'obtenir un produit thermo moulé amélioré à partir de cette composition. Un produit thermo-moulé selon l'invention a une meilleure résistance mécanique et ne subit pas de dégradation lors de l'étape de thermoformage.

Selon un mode de réalisation particulier de la présente invention, la composition comprend en outre de la kératine dans une proportion comprise entre 2 et 8 % en poids de masse de la composition totale. L'ajout de kératine aux matières premières composées de son de blé permet d'obtenir de meilleures résistances mécaniques et thermiques, retarde l'apparition de moisissures sur le produit fini, et donne un aspect brillant en surface du produit.

Selon encore une autre caractéristique de l'invention, la composition comprend de la chitine dans une proportion comprise entre 0.5 et 2 % en poids de masse de la composition totale. L'ajout de chitine aux matières premières composées de son de blé permet d'obtenir une meilleure résistance mécanique et favorise la migration d'humidité dans le produit, l'aspect sera également amélioré conférant au produit fini un aspect de brillance en surface.

Selon un autre mode de réalisation particulier de la présente invention, la composition comprend de la caséine dans une proportion comprise entre 0.5 et 3 % en poids de masse de la composition totale. L'ajout de caséine aux matières premières composées de son de blé permet d'obtenir de meilleures résistances mécaniques et thermiques, retarde l'apparition de moisissures sur le produit fini, et donne un aspect brillant en surface du produit.

Dans un deuxième aspect, la présente invention décrit également un procédé pour la fabrication d'au moins un produit thermo-moulé à partir de la composition selon l'invention comprenant les étapes suivantes :
- Mélange et humidification de la composition pendant une durée comprise entre 2 et 30 minutes, de préférence 5 minutes,
- Extrusion de la composition mélangée formant ainsi une plaque,
- Chauffage de la plaque entre 50° et 250°, de préférence entre 70° et 80°,
- Thermoformage et découpe selon la forme du produit fini voulu avec un pressage simultané au chauffage compris entre 5 et 500 kg/cm2 pendant une durée de 10 à 600 secondes, de préférence de 50 kg/cm2 durant 300 secondes, et
- Démoulage et récupération d'au moins un produit fini.

Selon une forme de réalisation du procédé, l'étape de thermoformage se fait au moyen d'une presse apte à thermoformer une plaque de la composition.

Selon une caractéristique du procédé selon l'invention, la presse est apte à thermoformer quatre produits finis.

Selon une forme de réalisation du procédé, la presse est apte à thermo former quatre produits thermo-moulés à partir d'une plaque de la composition.

Selon une forme de réalisation du procédé, l'étape de mélange se fait dans une vis de mélange et d'humidification.

Selon une caractéristique du procédé selon l'invention, la composition en sortie de la vis de mélange et d'humidification est mise dans un trémie d'alimentation. L'utilisation d'un trémie permet de s'assurer que des grains trop gros de son de blé ne se retrouvent dans la composition.

Selon une forme de réalisation du procédé, l'étape d'extrusion se fait au moyen de premiers rouleaux chauffant de compactage et de second rouleaux de conformage.

Selon une forme de réalisation du procédé, l'étape de chauffage se fait sur un tapis de transfert continu et de post traitement apte également pour une vaporisation ou l'ajout d'une couche d'additifs de surface.

Dans un troisième aspect, la présente invention décrit également un produit thermo-moulé obtenu par la procédé de fabrication selon l'invention.

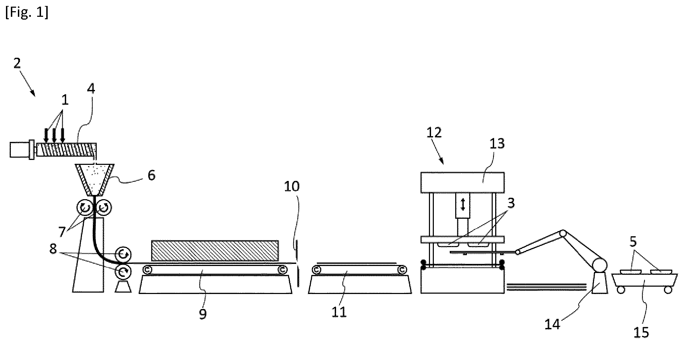

[Fig. 1] est une vue en perspective d'une forme de réalisation du procédé selon l'invention.

Il est à noter que sur ces figures les éléments structurels et/ou fonctionnels communs aux différentes variantes peuvent présenter les mêmes références. La présente invention est maintenant décrite à l'aide d'exemples uniquement illustratifs et nullement limitatifs de la portée de l'invention.

La composition 1 biodégradable selon la présente invention est à base de son de blé. Le premier paramètre essentiel est la granulométrie du son utilisé. C'est ainsi que la composition 1 selon la présente invention recourt à une granulométrie comprise entre 200 et 800 µm. Cette granulométrie est choisie pour obtenir les caractéristiques recherchées.

Le procédé 2 consiste à introduire du son de blé de la granulométrie retenue avec un taux stabilisé d'humidité compris entre 5 et 15% en poids de son, en l'occurrence 14% dans un malaxeur. On ajoute dans le malaxeur une quantité d'eau déminéralisée de 7,75% d'eau afin d'aboutir à une pâte, suivie d'une agitation pendant une durée comprise entre 2 et 30 minutes, plus particulièrement 5 minutes. On obtient une pâte avec le son hydraté.

Le procédé 2 consiste ensuite à assurer un thermoformage sous pression de cette pâte, notamment dans une presse, et en température. A cet effet, un moule 3, en l'occurrence de forme parallélépipédique est empli de la composition 1 sous forme de pâte, sortie du malaxeur 4 et le pressage est exercé à raison d'une pression comprise entre 5 et 500 kg/cm2, en l'occurrence de 50 kg/cm². La durée de pressage est comprise entre 10 et 600 secondes plus particulièrement 300 secondes. Un chauffage est prévu simultanément au pressage et la température varie de 50°C à 250°C, une température comprise entre 70 et 80°C est retenue. Des essais sont conduits avec une pression de 50 kg/cm², une température comprise entre 70 et 80°C et une durée de pressage de 300 secondes. Le démoulage de la plaque est immédiat. On constate qu'aucun refroidissement n'est nécessaire.

Le procédé 2 et la composition 1 évitent le refroidissement et permettent un démoulage de qualité et instantané.

Le produit fini 5 obtenu à partir de la composition 1 selon la présente invention une fois mise en forme par thermo-pressage dans les conditions du procédé 2 présente un taux d'humidité compris entre 2 et 15% en poids d'eau. En conditions de stockage simples, c'est-à-dire sans précautions particulières, notamment des conditions dans lesquelles il peut y avoir une saturation en humidité, l'apparition de moisissures sur les produits obtenus par thermoformage, à partir de la composition 1 selon la présente invention, mise en œuvre selon le procédé 2 de la présente invention, peut se constater dès 13 jours.

Afin de lutter contre l'apparition de moisissures et de permettre une durée de stockage plus importante, un et/ou plusieurs composés suivants sont inclus dans la composition 1 :
- Benzoate de Sodium
- Sorbate de Potassium
- Thiobendazole
- Acide ascorbique
- Acide oléïque, notamment commercialisé sous la dénomination "Radiacid Oléon 0134".

On ne constate aucun changement de couleur du produit 5 du fait de ces composés. Avec la pulvérisation de Sorbate de Potassium à raison de 0,6% en poids du mélange son/eau, la durée d'apparition est reportée à 120 jours.

Selon des formes particulières de l'invention, des agents supplémentaires à ceux choisis parmi le benzoate de sodium, le sorbate de potassium, le thiobendazole, et l'acide ascorbique, sont ajoutés à la composition 1 afin d'empêcher l'apparition de moisissures et/ou, d'augmenter la résistance mécanique du produit fini de limiter la migration d'humidité et/ou également d'améliorer l'aspect visuel du produit fini. Ces agents décrits ci-dessous sont ajoutés seuls ou en combinaison entre eux et avec les agents choisis parmi le benzoate de sodium, le sorbate de potassium, le thiobendazole, et l'acide ascorbique.

Selon un premier exemple de réalisation, l'ajout de 2 à 8 % de kératine à la masse de matières premières composées de son de blé permet de meilleures résistances mécaniques, thermiques, retarde l'apparition de moisissures sur le produit fini, et donne un aspect brillant en surface du produit thermoformé fini.

Selon une autre forme de réalisation, la chitine est un agent compatible avec la présente invention.

Concernant la chitine, le taux optimal d'ajout aux matières premières est plus faible, à savoir entre 0,5% et 2%. L'ajout de chitine améliore la résistance mécanique du produit fini, favorise la migration d'humidité dans le produit et l'aspect du produit fin sera également amélioré en proposant un aspect de brillance en surface.

Afin de fournir le meilleur rendement de production du produit final 5 voulu en limitant les pertes et augmentant la cadence de production, un procédé 2 de fabrication de produit à partir de la composition 1 selon l'invention a été mis en œuvre.

La figure 1 illustre schématiquement une forme de réalisation du procédé 2 selon l'invention.

La première étape vise le mélangeage des matières premières enrichies formant la composition 1. Les matières premières enrichies, à savoir le son de blé, l'eau et au moins un agent choisi parmi le benzoate de sodium, le sorbate de potassium, le thiobendazole, et l'acide ascorbique, sont donc introduites dans une vis de mélange et d'humidification 4 qui fait office de malaxeur 4.

La composition 1 ainsi mélangée peut ensuite être mise dans un trémie d'alimentation 6. Optionnellement, ce trémie 6 peut également chauffer le mélange.

Ensuite, selon une étape d'extrusion du procédé 2, le mélange de matières premières passe par des rouleaux chauffant de compactage 7 et également par des rouleaux chauffant de conformage 8.

La composition 1 sous forme de plaque est ensuite destinée à être chauffée. Cette étape peut avoir lieu sur un tapis de transfert continu et de post traitement 9. D'autres opérations telles qu'une polymérisation à chaud ou une humidification peuvent avoir lieu sur ce tapis 9.

Une guillotine 10 est disposée en aval du tapis 9 afin de découper la plaque en plusieurs plaques aptes à être thermoformées.

Des morceaux de plaque sont ensuite acheminés via un tapis de transfert discontinu 11 vers le poste de thermoformage et découpe 12. Cette étape permet la mise en forme de produits finis 5 au moyen d'une presse 13 chauffante. Avantageusement plusieurs moules 3 peuvent être disposés à ce poste 12 selon les dimensions et de la plaque et du format fini du produit 5 voulu. Selon une forme de réalisation de l'invention, des assiettes sont thermoformées à partir de la composition 1 selon l'invention

Enfin, la dernière étape de démoulage et récupération du produit fini 5 peut se faire à l'aide d'un robot de déchargement 14, par exemple avec manipulateur à ventouse.

Selon une forme de réalisation du procédé 2, un chariot de stockage 15 des produits finis 5 est prévu.

Cet exemple de synoptique précédemment décrit permet d'obtenir un rendement accru du procédé de fabrication de produits thermo-moulés.

Selon un exemple de réalisation du procédé pour la fabrication d'assiettes, des cycles de 30 secondes peuvent être mis en œuvre avec quatre assiettes de diamètre de 228 mm par cycle, soit 480 assiettes disponibles en une heure.

## Revendications

1. Composition (1) pour la fabrication d'un produit thermo-moulé (5), **caractérisée en ce qu'**elle comprend du son de blé avec une granulométrie comprise entre 200 et 800 µm et un taux stabilisé d'humidité compris entre 5 et 15% en poids de son ainsi que de l'eau et au moins un agent apte à lutter contre l'apparition de moisissures, l'agent destiné à lutter contre l'apparition de moisissures étant choisi parmi les composés suivants :
- Benzoate de sodium.
- Sorbate de potassium.
- Thiobendazole.
- Acide ascorbique.
- Acid oléique.

2. Composition (1) selon la revendication précédente, **caractérisée en ce que** le son présente un taux stabilisé d'humidité de 14% et **en ce que** l'eau est présente dans la composition en une quantité de 7,75%.

3. Composition (1) selon l'une des revendications précédentes, **caractérisée en ce que** le Sorbate de potassium est ajouté par pulvérisation à raison de 0,6% en poids du mélange.

4. Composition (1) selon l'une quelconque des revendications précédentes comprenant de la kératine dans une proportion comprise entre 2 et 8 % en poids de masse de la composition totale.

5. Composition (1) selon l'une quelconque des revendications précédentes comprenant de la chitine dans une proportion comprise entre 0.5 et 2 % en poids de masse de la composition totale.

6. Composition (1) selon l'une quelconque des revendications précédentes comprenant de la caséine dans une proportion comprise entre 0.5 et 3 % en poids de masse de la composition totale.

7. Procédé (2) pour la fabrication d'au moins un produit (5) thermo-moulé à partir de la composition (1) selon l'une des revendications 1 à 6 comprenant les étapes suivantes :
- Mélange et humidification de la composition (1) pendant une durée comprise entre 2 et 30 minutes, de préférence 5 minutes,
- Extrusion de la composition (1) mélangée formant ainsi une plaque,
- Chauffage de la plaque entre 50° et 250°, de préférence entre 70° et 80°,
- Thermoformage et découpe selon la forme du produit fini (5) voulu avec un pressage simultané au chauffage compris entre 5 et 500 kg/cm2 pendant une durée de 10 à 600 secondes, de préférence de 50 kg/cm2 durant 300 secondes,
, et
- Démoulage et récupération d'au moins un produit (5) fini.

8. Procédé (2) selon la revendication précédente dans lequel l'étape de thermoformage se fait au moyen d'une presse (13) apte à thermo former une plaque de la composition (1).

9. Procédé (2) selon la revendication précédente dans lequel la presse (13) est apte à thermo former quatre produits (5) thermo-moulés à partir d'une plaque de la composition (1).

10. Procédé (2) selon l'une des revendications 7 à 9 dans lequel l'étape de mélange se fait dans une vis de mélange et d'humidification (4).

11. Procédé (2) selon la revendication précédente dans lequel la composition en sortie de la vis de mélange et d'humidification (4) est mise dans un trémie d'alimentation (6).

12. Procédé (2) selon l'une des revendications 7 à 11 dans lequel l'étape d'extrusion se fait au moyen de premiers rouleaux chauffant de compactage (7) et de seconds rouleaux de conformage (8).

13. Procédé (2) selon l'une des revendications 7 à 12 dans lequel l'étape de chauffage se fait sur un tapis de transfert continu et de post traitement (9) apte également pour une vaporisation ou l'ajout d'une couche d'additifs de surface.

14. Produit (5) thermo-moulé obtenu par le procédé de fabrication selon l'une des revendications 7 à 13.

## Patentansprüche

1. Zusammensetzung (1) zur Herstellung eines thermogeformten Produkts (5), **dadurch gekennzeichnet, dass** sie Weizenkleie mit einer Korngröße zwischen 200 und 800 µm und einem stabilisierten Feuchtigkeitsgehalt zwischen 5 und 15 Gew.-% Kleie sowie Wasser und mindestens ein Mittel zur Bekämpfung von Schimmelbildung umfasst, wobei das Mittel zur Bekämpfung von Schimmelbildung ausgewählt ist aus den folgenden Verbindungen:
- Natriumbenzoat.
- Kaliumsorbat.
- Thiobendazol.
- Ascorbinsäure.
- Ölsäure.

2. Zusammensetzung (1) nach dem vorstehenden Anspruch,
**dadurch gekennzeichnet, dass** die Kleie einen stabilisierten Feuchtigkeitsgehalt von 14 % aufweist und dass in der Zusammensetzung ein Wasseranteil von 7,75 % vorhanden ist.

3. Zusammensetzung (1) nach einem der vorstehenden Ansprüche, **dadurch gekennzeichnet, dass** Kaliumsorbat durch Aufsprühen in einer Menge von 0,6 Gew.-% der Mischung hinzugefügt wird.

4. Zusammensetzung (1) nach einem beliebigen der vorstehenden Ansprüche, umfassend Keratin in einem Anteil zwischen 2 und 8 Gew.-% des Gesamtgewichts der Zusammensetzung.

5. Zusammensetzung (1) nach einem beliebigen der vorstehenden Ansprüche, umfassend Chitin in einem Anteil zwischen 0,5 und 2 Gew.-% des Gesamtgewichts der Zusammensetzung.

6. Zusammensetzung (1) nach einem beliebigen der vorstehenden Ansprüche, umfassend Casein in einem Anteil zwischen 0,5 und 3 Gew.-% des Gesamtgewichts der Zusammensetzung.

7. Verfahren (2) zur Herstellung mindestens eines thermogeformten Produkts (5) aus der Zusammensetzung (1) gemäß einem der Ansprüche 1 bis 6, umfassend die folgenden Schritte:
- Mischen und Befeuchten der Zusammensetzung (1) für einen Zeitraum zwischen 2 und 30 Minuten, vorzugsweise 5 Minuten,
- Extrusion der gemischten Zusammensetzung (1) unter Bildung einer Platte,
- Erhitzen der Platte zwischen 50° und 250°, vorzugsweise zwischen 70° und 80°,
- Thermoformen und Schneiden entsprechend der Form des gewünschten Endprodukts (5) unter gleichzeitigem Pressen und Erhitzen mit 5 bis 500 kg/cm² für eine Dauer von 10 bis 600 Sekunden, vorzugsweise 50 kg/cm² für 300 Sekunden, und
- Entformen und Gewinnung von mindestens einem Endprodukt (5).

8. Verfahren (2) nach dem vorstehenden Anspruch, bei dem der Thermoformungsschritt mittels einer Presse (13) durchgeführt wird, die in der Lage ist, eine Platte aus der Zusammensetzung (1) durch Thermoformen herzustellen.

9. Verfahren (2) nach dem vorstehenden Anspruch, bei dem die Presse (13) in der Lage ist, aus einer Platte der Zusammensetzung (1) vier thermogeformte Produkte (5) durch Thermoformen herzustellen.

10. Verfahren (2) nach einem der Ansprüche 7 bis 9, bei dem der Mischschritt in einer Misch- und Befeuchtungsschnecke (4) durchgeführt wird.

11. Verfahren (2) nach dem vorstehenden Anspruch, bei dem die Zusammensetzung am Ausgang der Misch- und Befeuchtungsschnecke (4) in einen Einfülltrichter (6) gegeben wird.

12. Verfahren (2) nach einem der Ansprüche 7 bis 11, bei dem der Extrusionsschritt mittels erster Heizkompaktierwalzen (7) und zweiter Formgebungswalzen (8) durchgeführt wird.

13. Verfahren (2) nach einem der Ansprüche 7 bis 12, bei dem der Erwärmungsschritt auf einem Übertragungs- und Nachbehandlungs-Endlosband (9) durchgeführt wird, das auch zum Aufdampfen oder zum Aufbringen einer Schicht von Oberflächenadditiven geeignet ist.

14. Thermogeformtes Produkt (5), das durch das Herstellungsverfahren nach einem der Ansprüche 7 bis 13 erhalten wird.

## Claims

1. A composition (1) for producing a thermo-molded product (5), **characterized in that** it comprises wheat bran with a particle size of between 200 and 800 µm and a stabilized moisture content of between 5 and 15% by weight of bran, as well as water and at least one agent capable of combating the appearance of mold, the agent intended to combat the appearance of mold being selected from the following compounds:
- Sodium benzoate.
- Potassium sorbate.
- Thiobendazole.
- Ascorbic acid.
- Oleic acid.

2. The composition (1) according to the preceding claim,
**characterized in that** the bran has a stabilized moisture content of 14% and **in that** the water is present in the composition in an amount of 7.75%.

3. The composition (1) according to one of the preceding claims, **characterized in that** potassium sorbate is added by spraying in an amount of 0.6% by weight of the mixture.

4. The composition (1) according to any one of the preceding claims, comprising keratin in a proportion of between 2 and 8% by weight of the total composition.

5. The composition (1) according to any one of the preceding claims, comprising chitin in a proportion of between 0.5 and 2% by weight of the total composition.

6. The composition (1) according to any one of the preceding claims, comprising casein in a proportion of between 0.5 and 3% by weight of the total composition.

7. A method (2) for producing at least one thermo-molded product (5) from the composition (1) according to one of claims 1 to 6, comprising the following steps:
- Mixing and moistening the composition (1) for between 2 and 30 minutes, preferably 5 minutes,
- Extruding the mixed composition (1) to form a plate,
- Heating the plate to between 50° and 250°, preferably between 70° and 80°,
- Thermoforming and cutting to shape according to the desired finished product (5) with simultaneous pressing under heating of between 5 and 500 kg/cm2 for a duration of 10 to 600 seconds, preferably 50 kg/cm2 for 300 seconds, and
- Demolding and recovering at least one finished product (5).

8. The method (2) according to the preceding claim, wherein the thermoforming step is carried out by means of a press (13) capable of thermoforming a plate of the composition (1).

9. The method (2) according to the preceding claim, wherein the press (13) is able to thermoform four thermo-molded products (5) from a plate of the composition (1).

10. The method (2) according to one of claims 7 to 9, wherein the mixing step takes place in a mixing and humidifying screw (4).

11. The method (2) according to the preceding claim, wherein the composition at the outlet of the mixing and humidifying screw (4) is fed into a feed hopper (6).

12. The method (2) according to one of claims 7 to 11, wherein the extrusion step is carried out by means of first heated compaction rollers (7) and second forming rollers (8).

13. The method (2) according to one of claims 7 to 12, wherein the heating step takes place on a continuous-transfer and post-treatment belt (9) which is also suitable for spraying or adding a layer of surface additives.

14. A thermo-molded product (5) obtained by the production method according to one of claims 7 to 13.
